# EUROPEAN PATENT APPLICATION

(11) **EP 4 410 844 A1**
(43) Date of publication of application: **07.08.2024**
(21) Application number: 21958486.9
(22) Date of filing: 27.09.2021
(51) Int. Cl.: C08B 1/00, C08B 1/02, C08B 3/24

(54) **METHOD FOR DISSOCIATING AND EXTRACTING CELLULOSE RAW MATERIAL EXHIBITING LOW-ENERGY CHARACTERISTICS, METHOD FOR PRODUCING CELLULOSE MICROFIBER COMPRISING SAME, AND APPARATUS FOR MANUFACTURING CELLULOSE MICROFIBER**

(71) Applicant: Movic Amt Co., Ltd., Hwaseong-si, Gyeonggi-do 18469 (KR)
(72) Inventor: SONG, In Kap, Suwon-si, Gyeonggi-do 16504 (KR)
(74) Representative: Schmitt-Nilson Schraud Waibel Wohlfrom Patentanwälte Partnerschaft mbB
(86) International application number: PCT/KR2021/013099
(87) International publication number: WO 2023/048309

(57) **Abstract**

Disclosed are a method for dissociating and extracting a cellulose raw material, comprising: a first step of mixing a cellulose raw material and a swelling agent so as to swell the cellulose raw material; a second step of adding a sublimable material to the swollen cellulose raw material; a third step of irradiating electron beams to the cellulose raw material to which the sublimable material has been added; and a fourth step of nanobubbling the raw material to which the electron beams have been irradiated, a method for producing a cellulose microfiber comprising the method for dissociating and extracting the cellulose raw material, a cellulose microfiber produced according to the method for producing a cellulose microfiber, and an apparatus for manufacturing a cellulose microfiber in which the method for producing a cellulose microfiber can be performed. The method for producing a cellulose microfiber of the present invention has advantages in terms of production cost and performance conditions.

## Description

### [TECHNICAL FIELD]

The present disclosure relates to a method for dissociating and extracting a cellulose raw material exhibiting low-energy characteristics, a method for producing a cellulose microfiber including the same, and an apparatus for manufacturing a cellulose microfiber, and more particularly, to a method of grinding a cellulose raw material having improved energy consumption using a sublimable material, a method for producing a cellulose microfiber including the same, an apparatus for manufacturing a cellulose microfiber, and a cellulose microfiber manufactured according to the production method.

### [BACKGROUND ART]

Nanotechnology (NT) is a technology that obtains desired properties using unique properties of nano-sized particle materials. To solve an environmental problem of conventional fossil fuel-based polymer compounds, interest in environmental-friendly polymers is increasing together with nano-technology research. Interest in cellulose as a representative example of an environmental-friendly polymer is steadily increasing.

The cellulose is one of the most common polymers present in nature. Thus, the cellulose has an advantage in terms of supply and is also reproducible. In addition, the cellulose has an advantage in that the cellulose is easily biodegraded as compared to polymer compounds synthesized from crude oil.

The cellulose is made by continuously bonding two glucoses, that is, cellobioses, connected by β-(1-4) linkage, the number of bonds is expressed as the degree of polymerization DP. In nature, the number of bonds of wood is about 10,000 and the number of bonds of cotton is about 15,000. The degree of polymerization is related to a length of a cellulose chain, and these cellulose chains are gathered to form a single structure within a cell wall, which is called a microfibril. The microfibril is the smallest unit of cellulose nano-materials that may be physically or chemically isolated and has a width of about 4 nm to 5 nm. Nanocellulose is a general term for cellulose having a diameter or length in units of nanometers and is called a cellulose nano-fiber (CNF) or a microfibrillated cellulose (MFC). Microfibrils are arranged and clustered in a spiral shape with respect to an axial direction to form a microfibril bundle, and a gap between the microfibrils or a portion of a chain is formed as an amorphous area.

Meanwhile, a method for isolating a cellulose raw material is roughly classified into a chemical process, a biological process, and a physical process. The chemical process is a concept that collectively refers to a process of chemically dissociating a glycosidic bond that constitutes a cellulose polymer by adding an acid catalyst or the like. When the cellulose is hydrolyzed by acid, the amorphous area as described above is hydrolyzed faster than a crystalline area. Thus, when the cellulose is hydrolyzed under an appropriate condition, whisker-shaped cellulose nano-crystals mainly including crystalline areas may be obtained. These cellulose nano-crystals have no defect, have an elastic modulus of about 150 GPa, have excellent acid resistance, and thus may be used as composite materials, biomedical engineering composite materials, or the like.

However, in the chemical process, a strong acid catalyst such as sulfuric acid is usually used for the purpose of improving water dispersibility of the cellulose raw material or the like. Risk in the process, difficulty in separation and cleaning after hydrolysis, and an environmental problem due to wastewater treatment may be limiting conditions for mass production. In addition, in the hydrolysis process, sulfate groups may be substituted on surfaces of the cellulose nano-crystals, and the sulfate group may cause degradation of physical properties of cellulose fibers.

Meanwhile, the biological process is a method of using bacteria that may break down the glycosidic bond in the cellulose. The biological process has an advantage in that the cellulose is uniformly decomposed by the bacteria, making it particularly easy to produce a cellulose microfiber using a bottom-up method. However, there is a limitation in that costs of cultivating and maintaining the bacteria are considerable, a yield rate is not high, and thus industrial production is limited.

Unlike the chemical process and the biological process, the physical process is a concept that collectively refers to a process of inducing the isolation of the cellulose by projecting an external force to the cellulose. Examples of the physical process include a high-intensity ultrasonic process, a high-pressure refiner process, a grinder process, a high-pressure homogenizer process or the like. The physical process has advantages in that a process itself is simple compared to other processes, formation of α-anomer is limited, and crystalline and amorphous substances are relatively uniformly contained in the cellulose microfiber, resulting in improved physical properties.

However, the conventional physical process has a critical limitation in that about 70,000 KWh of energy is consumed to manufacture 1 ton of cellulose microfibers. For example, when a high-pressure homogenizer is used, the energy consumption may be implemented under a pressure condition of 3,000 bar, and heat instantaneously generated during a homogenization process may be greater than 250 °C (for example, Korean Patent No. 10-1992492 requires a temperature condition of 270°C). In particular, when homogenization is performed under a high temperature condition of 250°C or higher, unnecessary carbonization of the cellulose raw material may be generated.

Thus, to improve the limitations of the conventional physical process, a method in which the physical process is performed after a chemical pre-process and a method in which the physical process is performed after a biological pre-process have been proposed. However, in the above-described method, the limitations unique to the chemical process or the biological process and the limitations of the physical process may be exhibited simultaneously.

### [DETAILED DESCRIPTION OF THE INVENTION]

### [TECHINICAL PROBLEM]

An aspect of the present disclosure is to provide a method for dissociating and extracting a cellulose raw material having low energy characteristics.

Further, another aspect of the present disclosure is to provide a method for producing a cellulose microfiber, which may be performed under a low-temperature condition.

Further, still another aspect of the present disclosure is to provide an apparatus for manufacturing a cellulose microfiber, in which the method for dissociating and extracting a cellulose raw material and the method for producing a cellulose microfiber are performed.

### [TECHNICAL SOLUTION]

As a result of research for solving the above-described problems, the present inventors come up with an invention including the following configuration. A method for dissociating and extracting a cellulose raw material includes a first operation of mixing the cellulose raw material and a swelling agent and swelling the cellulose raw material, a second operation of adding a sublimable material to the swollen cellulose raw material, a third operation of irradiating the cellulose raw material, to which the sublimable material is added, with an electron beam, and a fourth operation of nano-bubbling the cellulose raw material irradiated with the electron beam.

Further, in a method of grinding a cellulose raw material according to the present disclosure, the swelling agent may be the distilled water, and the sublimating material may include one or more materials selected from the group consisting of dry ice, liquid nitrogen, liquid helium, liquid neon, and liquid argon.

Further, in the method of grinding a cellulose raw material according to the present disclosure, the sublimable material may be the dry ice.

Further, in the method of grinding a cellulose raw material according to the present disclosure, the first operation and the second operation may be performed under a temperature condition of 1°C or more and 100°C or less.

Further, in the method of grinding a cellulose raw material according to the present disclosure, the first operation and the second operation may be performed under a temperature condition of 1°C or more and 10°C or less.

Meanwhile, the specification additionally discloses a method for producing a cellulose microfiber, the method including an operation of preparing the cellulose raw material ground according to any one method of grinding a cellulose raw material among the methods for dissociating and extracting a cellulose raw material according the present disclosure, an operation of synthesizing the cellulose microfiber through the physical process from the ground cellulose raw material, and an operation of stabilizing the cellulose microfiber by projecting ultrasonic waves to the cellulose microfiber.

Further, in the method for producing a cellulose microfiber according to the present disclosure, in the physical process, the dissociated and extracted cellulose raw material may be contained in in the micro-channel and the dissociated and extracted cellulose raw material may be rotated at a rotational speed of 1,000 rpm or more.

Further, in the method of grinding a cellulose raw material according to the present disclosure, the micro-channel may have a length of a short axis of 1 µm or more and 100 µm or less.

Further, in the method of grinding a cellulose raw material according to the present disclosure, the micro-channel may have the length of the short axis of 10 µm or more and 20 µm or less.

Meanwhile, the specification additionally discloses a cellulose microfiber produced according to the method for producing a cellulose microfiber according to the present disclosure.

Meanwhile, the specification additionally discloses an apparatus for manufacturing a cellulose microfiber, the apparatus including a homogenization unit which includes a stirrer and a pressure controller and in which the cellulose raw material is ground, a pressing unit that induces synthesis of the cellulose microfiber by pressing the ground cellulose raw material obtained by the homogenization unit, and a stabilization unit that projects ultrasonic waves to the cellulose microfiber.

Further, in the apparatus for manufacturing a cellulose microfiber according to the present disclosure, it is more preferable that the pressing unit further includes at least one micro-channel in which the ground cellulose raw material is stored or passes and at least one rotor positioned inside the micro-channel and rotating the ground cellulose raw material to apply a shear force to the ground cellulose raw material.

### [ADVANTAGEOUS EFFECTS OF THE INVENTION]

By applying the above-described summary, in the present disclosure, a cellulose raw material may be easily ground under a low-temperature condition using an expansion pressure of a sublimable material, and as a result, carbonization of the cellulose raw material and energy consumption may be minimized.

Further, in the method for producing a cellulose microfiber according to the present disclosure, energy consumed for preparing the cellulose raw material is significantly saved, and thus a low-energy process may be implemented.

Further, in an apparatus for manufacturing a cellulose microfiber according to the present disclosure, a general process of manufacturing a cellulose microfiber may be performed through a simple structure, and thus there are advantages in terms of commercial production of the cellulose microfiber.

### [BEST MODE]

Terms used herein are merely used to describe specific examples. Thus, for example, a singular expression includes a plural expression unless the context clearly indicates a singular form. In addition, it should be noted that terms such as "comprising" or "including" used herein are used to clearly indicate the presence of features, operations, functions, components, or combinations thereof described in the specification and are not used to preliminarily exclude the presence of other features, other operations, other functions, other components, or other combinations thereof.

Meanwhile, unless otherwise defined, all terms used in the specification have the same meanings as those commonly understood by those skilled in the art to which the present disclosure belongs. Thus, unless clearly defined in the specification, specific terms should not be interpreted in an excessively idealistic or formal meaning.

In the description of the specification, "low energy" means that an entire or partial process is effectively performed with only projection of significantly low energy as compared to the related art in the relevant technical field. In a region of a physical process method or a physical dissociation and extraction method on which the present disclosure is based, about 20 KJ/mol of energy is generally consumed to isolate or dissociate and extract cellulose raw materials. Thus, the producing method of the present disclosure as a low-energy method may be implemented by effectively supplying about 20 KJ/mol of energy without loss at a low temperature.

In the description of the specification, the "cellulose raw materials" includes the following materials. However, the present disclosure is not limited thereto, and those skilled in the art may freely select the materials in light of the purpose. Exemplarily, microcrystalline cellulose, microbial cellulose, cellulose derived from the sea or other invertebrates, mechanically produced wood pulp, chemical (dissolved) pulp, native biomass (in the form of plant fibers, stems, or hulls), a cellulose-based artificial fiber such as a tire cord, and other cellulose II sources such as mercerised cellulose may be considered as the cellulose raw materials.

In addition, within the scope not inconsistent with the technology of the present disclosure, the cellulose raw material includes a derivative. For example, a carboxylated derivative, an oxidized derivative, an esterified derivative or the like may be considered as an example of the cellulose derivative of the present disclosure. Meanwhile, the cellulose raw material of the present disclosure may be provided in the form of powder.

In detail, a cellulose fiber derived from the wood pulp or a cellulosic biomass fiber may be considered as a preferred cellulose raw material. A fiber obtained from crushed wood and a fiber obtained from recycled or secondary wood pulp may be considered as an example of the wood pulp. Use of either softwood or hardwood is permitted. However, it is determined that whether the wood pump is bleached is not an important issue.

In the description of the specification, a "swelling agent" collectively refers to a material that disrupts an interaction between crystals present inside the cellulose raw material, dissociates some or more of bonds within the crystals, or disrupts both the interaction between the crystals and at least some of the bonds within the crystals. That is, in the embodiment of the present disclosure, use of the swelling agent does not mean complete solvation of the cellulose raw material.

Meanwhile, in the present disclosure, as will be described below, a temperature condition is limited. Further, in the embodiment of the present disclosure, in particular, it is preferable that the swelling agent is distilled water. For example, coagulation of the distilled water, which is the swelling agent, needs to be limited because the coagulation may lead to uneven isolation of the cellulose raw material.

However, those skilled in the art may additionally add one or more of the swelling agents, which will be described below, to promote swelling of the cellulose raw material within a scope in which the core of the technical spirit of the present disclosure is not damaged. An alkali metal oxides, an alkali metal hydroxide (e.g., a potassium hydroxide and a lithium hydroxide), an alkaline earth metal oxide, an alkaline earth metal hydroxide, an alkali silicate, an alkali aluminate, an alkali carbonate, an alkali thiocyanate, an alkaline earth thiocyanate, an alkali halide (e.g., a chloride, a fluoride, a bromide), an amine including an aliphatic hydrocarbon amine and a low aliphatic amine (e.g., a trimethylamine and a triethylamine), cupriethylenediamine, ammonia, an ammonium hydroxide, a tetramethyl ammonium hydroxide, a trimethylbenzylammonium hydroxide, a lithium chloride, a tertiary amine oxide (e.g., N-methyl morpholine N-oxide), an ionic liquid (e.g., a 1-ethyl-3-methylimidazolium acetate), urea, mixtures thereof, a zinc ammonium complex, a zinc chloride, a copper ammonium complex, a silver ammonium complex, a strontium hydroxide, a barium hydroxide, and mixtures thereof may be considered as examples of the swelling agent having the above-described properties.

In the description of the specification, a "sublimable material" includes both a material that is directly sublimated from a solid to a gas and a material that is vaporized from a liquid to a gas. As examples of the sublimable material described above, dry ice or the like that is sublimated may be considered, and liquid nitrogen, liquid helium, liquid neon, liquid argon, or the like that is vaporized may be considered.

In the description of the specification, a "dissociation and extraction method" refers to a method of isolating the cellulose raw material. In particular, a grinding method of the present disclosure mainly means dissociation and relaxation of bonds and interactions between the cellulose polymers not dissociation of bonds (i.e., glycosidic bonds) inside polymer compounds. Meanwhile, it may be understood that the dissociation and extraction method of the present disclosure is mainly performed by the physical process (i.e., application of an external force).

In the description of the specification, an "electron beam" refers to 1) a heavy charged particle such as an alpha particle, 2) an electron generated by beta decay or an electron beam accelerator, or 3) an electromagnetic radiation, for example, gamma rays, x-rays or ultraviolet rays. In an embodiment, the electromagnetic radiation (e.g., generated using an electron beam emitter) may be used to irradiate a feedstock. An applied dose may depend on a desired effect and a specific feedstock. For example, high doses of radiation may destroy chemical bonds within feedstock components, and low doses of radiation may increase (e.g., cross-link) chemical bonds within the feedstock components.

In an embodiment, the electron beam of the present disclosure may have the advantages in terms of high dose (e.g., 1, 5, or 10 Mrad/sec), high throughput, low contamination, and low limiting equipment. The electron may cause chain cutting more efficiently. Further, the electron having energy of 4 MeV to 10 MeV may have a penetration depth of 5 mm to 30 mm or more, for example, 40 mm.

The electron beam may be generated by, for example, an electrostatic generator, a cascade generator, a transformer generator, a low-energy accelerator having a scanning system, a low-energy accelerator having a linear cathode, a linear accelerator, and a pulse accelerator. The electron as an ionizing electron beam source may be useful, for example, for relatively thin piles of materials having a thickness of, for example, 0.5 inches or less, for example, 0.4 inches, 0.3 inches, 0.2 inches, and 0.1 inches or less. In some embodiments, energy of each electron in the electron beam is between about 0.3 MeV and about 2.0 MeV, for example, between about 0.5 MeV to about 1.5 MeV, or between about 0.7 MeV and about 1.25 MeV. Irradiation of the electron beam may mean that the cellulose raw material is irradiated with the electron beam of 10 to 300 kGy.

When the cellulose raw material is irradiated with the electron beam, a hemicellulose and lignin contained therein may be easily removed. That is, the electron beam not only serves to separate the entangled lignin and cellulose from each other but also physically damages the lignin and the hemicellulose, that is, a portion excluding the cellulose, and accordingly, a dissociation and extraction yield rate of the cellulose raw material may significantly increase.

In detail, the irradiation amount of the electron beam may be 10 kGy to 300 kGy, preferably, 10 kGy to 200 kGy, more preferably, 50 kGy to 200 kGy. When the irradiation amount of the electron beam is less than 10 kGy, the above-described effects obtained by irradiating the electron beam cannot be achieved, and when the irradiation amount of the electron beam is greater than 300 kGy, the cellulose as well as the lignin and the hemicellulose may be physically damaged. Accordingly, a yield rate of the finally separated cellulose may decrease, and a condition of the extracted cellulose may be poor due to damage caused by the electron beam.

Hereinafter, a method for dissociating and extracting a cellulose raw material according to the present disclosure will be described in more detail. The specification discloses a method of grinding a cellulose raw material, the method including a first operation of mixing the cellulose raw material and the swelling agent and thus swelling the cellulose raw material, a second operation of adding the sublimable material to the swollen cellulose raw material, a third operation of irradiating, with the electron beam, the cellulose raw material to which the sublimable material is added, and a fourth operation of nanobubbling the cellulose raw material irradiated with the electron beam.

Meanwhile, it is preferable that the first operation of the present disclosure is performed under a temperature condition of 1°C or more and 10°C or less. For example, when the first operation is performed under a temperature condition of less than 1°C, the distilled water, which is the swelling agent, may be coagulated. In contrast, when the first operation is performed under a temperature condition of 10°C or lower, there is an advantage in that hydrolysis of the glycosidic bonds is virtually limited.

In particular, a volume per unit mole of the distilled water, which is the swelling agent, is minimized at a temperature condition of about 4°C, and thus the greatest number of water molecules may penetrate into the cellulose raw material. As a result, in the operation of adding the sublimable material, which will be described below, dehydration of the distilled water that penetrates into the cellulose raw material may be maximized, and the cellulose raw material may be ground more uniformly.

Further, in the method of grinding a cellulose raw material according to the present disclosure, it is preferable that the swelling agent is the distilled water, and the sublimable material includes one or more materials selected from the group consisting of dry ice, liquid nitrogen, liquid helium, liquid neon, and liquid argon. In particular, in the method of grinding a cellulose raw material according to the present disclosure, it is more preferable that the sublimable material is dry ice from the viewpoint of ease of supply and storage.

Hereinafter, the description will be made based on the dry ice as the sublimable material. However, this description does not necessarily mean that the sublimable material of the present invention is the dry ice.

Meanwhile, the dry ice is added to the cellulose raw material into which the swelling agent penetrates. The weight ratio of cellulose: water: dry ice is 2:98:2. In this case, to achieve uniform dispersion of the dry ice, the cellulose raw material and the dry ice are stirred at a high speed. The type of stirrer is not particularly limited, but use of a mixer that is rotated at a high speed may be considered.

For example, the mixer may mix the cellulose raw material and the dry dice at a rotational speed of 500 rpm or more and 5,000 rpm or less. However, those skilled in the art may consider characteristics of the cellulose raw material, a temperature of the swelling agent, the amount of added dry ice or the like to adjust a rotational speed so that the cellulose raw material into which the swelling agent penetrates and the dry ice may be properly mixed.

Meanwhile, the dry ice, which comes into contact with the cellulose raw material, rapidly absorbs heat and sublimates. Due to the sublimation, a volume of the dry ice increases by more than 800 times, and the dry ice applies a strong expansion pressure to the cellulose raw material. Further, heat generated by the highspeed rotation is usually absorbed in the sublimation process, so that a temperature inside an apparatus for manufacturing a cellulose microfiber according to the present disclosure may be maintained at a 10°C or lower.

This means that the third operation of the present disclosure is performed under a low-temperature and high-pressure condition. In particular, as the cellulose raw material may be ground under a low-temperature condition, in the process of grinding the cellulose raw material according to the present disclosure, unnecessary carbonization and recrystallization of the cellulose raw material and formation of α-anomer may be minimized.

Further, the distilled water absorbed into the cellulose raw material is dehydrated at a high speed, disrupts an interaction between crystals of the cellulose raw material, and dissociates bonds between cellulose fibers or bonds inside the cellulose fibers. As a result, the cellulose raw material is isolated. In particular, when the distilled water sufficiently penetrates into the cellulose raw material, uniform isolation of the cellulose raw material may be expected.

Meanwhile, as described above, the process of grinding the cellulose raw material according to the present disclosure is performed under the low-temperature and high-pressure condition. In particular, this process is implemented by sublimating the dry ice uniformly mixed with the cellulose raw material. The sublimation of the dry ice causes a shear force, an impact force, or the like to be applied to the cellulose raw material in one or more directions. As a result, the cellulose raw material is ground more densely, and a diameter and a thickness of the ground cellulose raw material may be reduced more uniformly. That is, it may be understood that the cellulose raw material is homogenized.

Further, in the method of grinding a cellulose raw material according to the present disclosure, it is more preferable that the first operation and the third operation are performed under a temperature condition of 1°C or more and 100°C or less. When the first operation and the third operation are performed under a temperature condition of less than 1°C, the distilled water, which is the swelling agent, may be coagulated. In contrast, when the first operation and the third operation are performed under a temperature condition of more than 100 °C, unnecessary hydrolysis of glycosidic bonds may be generated meaningfully. As a result, the physical properties of the cellulose microfibers may be degraded due to the formation of the α-anomer.

From the viewpoint of minimizing the problems described above, the first operation and the third operation are preferably performed under a temperature condition of 1°C or more and 50°C or less, are more preferably performed under a temperature condition of 1°C or more and 20°C or less, and are most preferably performed under a temperature condition of 1°C or more and 10°C or less. In particular, when the first operation and the third operation are performed under a particular condition of 10°C or less, there is an advantage in that the hydrolysis of the glycosidic bonds is virtually limited.

Meanwhile, it should be noted that the cellulose raw material may be uniformly ground under a low-temperature condition of 10°C or less through the method of grinding a cellulose raw material according to the present disclosure, more accurately, use of the sublimable material (dry ice). That is, the fact that the method of grinding a cellulose raw material according to the present disclosure is performed under a temperature condition of 100°C or less provides the above-described additional advantage, but it should not be overlooked that the fact itself that the method may be performed at a low temperature is a special advantage of the present disclosure.

Meanwhile, the specification additionally discloses a method for producing a cellulose microfiber, the method including an operation of preparing the cellulose raw material ground according to any one method of grinding a cellulose raw material among the methods of grinding a cellulose raw material according the present disclosure, an operation of synthesizing the cellulose microfiber through the physical process from the ground cellulose raw material, and an operation of stabilizing the cellulose microfiber by projecting ultrasonic waves to the cellulose microfiber.

Further, in the method for producing a cellulose microfiber according to the present disclosure, the physical process corresponds to a method for dissociating and extracting a cellulose by containing the dissociated and extracted cellulose raw material in a micro-channel and moving a rotor inside the micro-channel at a high speed, and it is preferable that the cellulose raw material is rotated at a rotational speed of 1,000 rpm or more. Further, in the method of grinding a cellulose raw material according to the present disclosure, it is preferable that the micro-channel has a length of a short axis of 1 µm or more and 100 µm or less.

Meanwhile, the micro-channel may include two cone-shaped members (e.g., an upper surface and a lower surface or a left surface and a right surface) installed along the same axis. For example, one member (stator) is fixed, and the other one (rotor) is rotated at a high speed. Fine irregularities may be formed on outer surfaces of the stator and the rotor. The rotor is rotated at a high speed and additionally applies a shear force and an impact force to the ground cellulose raw material, thereby causing cavitation. As a result, the ground cellulose raw material is primarily transformed into the microfiber.

For example, a rotational speed of the rotor may be 1,000 rpm or more. As the above-described rotational speed is satisfied, a temperature rise of the ground cellulose raw material is limited to 100°C or less throughout the process of producing the cellulose microfiber, and thus degradation of the physical properties of the cellulose microfiber due to side reactions may be prevented.

Further, in the method of grinding a cellulose raw material according to the present disclosure, it is more preferable that the micro-channel has the length of the short axis of 10 µm or more and 20 µm or less. As the length of the short axis of the micro-channel deceases, a yield rate of the cellulose microfiber decreases. In contrast, as the length of the short axis of the micro-channel increases, uniform fiberization of the ground cellulose raw material is limited. Thus, it is preferable that the above range is satisfied from the viewpoint of balancing the yield rate and the obtained uniform microfiber.

Meanwhile, the specification additionally discloses the cellulose microfiber produced according to the method for producing a cellulose microfiber according to the present disclosure. The method for producing a microfiber according to the present disclosure does not require addition of the acid catalyst, uses the sublimable material with virtually no reactivity, and is performed in a low-temperature process. Thus, substituents are not introduced into the cellulose microfiber or functional groups of the cellulose are not oxidized or reduced. Further, carbonization thereof is limited. As a result, degradation of thermal stability and physical properties, which is not intended, from the cellulose microfiber, is limited.

Meanwhile, the specification additionally discloses an apparatus for manufacturing a cellulose microfiber, the apparatus including a homogenization unit which includes a stirrer and a pressure controller and in which the cellulose raw material is ground, a pressing unit that induces synthesis of the cellulose microfiber by pressing the ground cellulose raw material obtained by the homogenization unit, and a stabilization unit that projects ultrasonic waves to the cellulose microfiber.

Further, in the apparatus for manufacturing a cellulose microfiber according to the present disclosure, the type of stirrer is not particularly limited, but the use of the mixer that is rotated at a high speed may be considered. The stirrer mixes the cellulose raw material (especially, in the form with the swelling agent absorbed) positioned thereinside with the dry ice. A rotational speed of the stirrer may be in a range of 500 rpm to 5,000 rpm. When the rotational speed is less than 500 rpm, the cellulose raw material and the dry ice may not be mixed uniformly. In contrast, when the rotational speed is 5,000 rpm or higher, an excessive amount of the dry ice should be added to maintain the temperature condition of 100°C or less, and a yield rate of the cellulose microfiber per hour may be significantly reduced.

Further, in the apparatus for manufacturing a cellulose microfiber according to the present disclosure, a pressure controller serves to control an expansion pressure generated when the sublimable material comes into contact with the cellulose raw material. In particular, the pressure controller may include a container that limits outflow of the expansion pressure and a nozzle installed on one surface of the container to maintain the pressure constant. The nozzle may discharge a portion or the entirety of the sublimated material (vaporized material) from an inside to an outside.

Meanwhile, the homogenization unit according to the present disclosure may further include a reservoir capable of storing and releasing the sublimable material. The sublimable material may be positioned in the reservoir, and the reservoir may be opened or closed in a direction of the stirrer. In particular, after the homogenization unit is sealed, the sublimable material positioned inside the reservoir may be dropped into the stirrer. As a result, external outflow of the sublimable material due to sublimation or vaporization thereof is limited, and thus a high-pressure condition inside the homogenization unit may be effectively implemented.

After the cellulose raw material is ground in the homogenization unit, the ground cellulose raw material is delivered to the pressing unit. To minimize contact with the atmosphere, a connection part for delivering the ground cellulose raw material to the pressing unit may be formed between the homogenization unit and the pressing unit.

That is, the connection part enables movement of a material between the homogenization unit and the pressing unit. In addition, a door that may be opened or closed manually or automatically may be formed at a connection portion between the connection part and the homogenization unit. It is preferable that the door is closed when the stirrer is in operation, and it is preferable that the door is opened when the ground cellulose raw material is moved.

Further, in the apparatus for manufacturing a cellulose microfiber according to the present disclosure, it is more preferable that the pressing unit further includes at least one micro-channel in which the ground cellulose raw material is stored or passes and at least one rotor positioned inside the micro-channel and rotating the ground cellulose raw material to apply a shear force to the ground cellulose raw material.

Meanwhile, in the apparatus for manufacturing a cellulose microfiber according to the present disclosure, the pressing unit may include one or more micro-channels. An inside of the micro-channel may be filled with the ground cellulose raw material. Further, two or more micro-channels may be positioned parallel to each other.

Meanwhile, it is preferable that the length of short axis of the micro-channel is in a range of 1 µm to 100 µm, and it is more preferable that the length of the short axis of the micro-channel is in a range of 10 µm to 20 µm. As the length of the short axis of the micro-channel deceases, the yield rate of the cellulose microfiber decreases. In contrast, as the length of the short axis of the micro-channel increases, the uniform fiberization of the ground cellulose raw material is limited. Thus, it is preferable that the above range is satisfied from the viewpoint of balancing the yield rate and the obtained uniform microfiber.

It is preferable that the ground cellulose raw material moves inside the micro-channel at a rotational speed of 1,000 rpm or more. As the above-described rotational speed is satisfied, the temperature rise of the ground cellulose raw material is limited, and thus the degradation of the physical properties of the cellulose microfiber due to side reactions may be prevented.

Meanwhile, to achieve the above-described rotational speed, a method of rotating the integral micro-channel may be considered. Further, the micro-channel may include two cone-shaped members (e.g., an upper surface and a lower surface or a left surface and a right surface) installed along the same axis. For example, one member (stator) is fixed, and the other one (rotor) is rotated at a high speed. Fine irregularities may be formed on outer surfaces of the stator and the rotor. The rotor is rotated at a high speed and additionally applies a shear force and an impact force to the ground cellulose raw material, thereby causing cavitation. As a result, the ground cellulose raw material is primarily transformed into the microfiber.

Meanwhile, in the apparatus for manufacturing a cellulose microfiber according to the present disclosure, the stabilization unit may further include an ultrasonic wave generation unit that projects ultrasonic waves to the cellulose microfiber. Further, the ultrasonic wave generation unit may be immersed in the cellulose microfiber to effectively transmit the ultrasonic waves to a deep portion of the cellulose microfiber. In particular, as the ultrasonic waves are delivered, microfibrilization is further promoted and completed, and homogenization of the cellulose microfiber may be further progressed.

### {Embodiment and Evaluation}

Hereinafter, the appended claims of the specification will be described in more detail with reference to examples. However, examples presented in the specification may be modified in various manners by those skilled in the art and thus may have various forms. Thus, it should be construed that the description of the specification does not limit the present disclosure to a specific disclosure form and includes all equivalents and substitutes included in the spirit and technical scope of the present disclosure.

### Example 1: Dissociation of Cellulose Raw Material

Microcrystalline cellulose powder (Cellulose fiber, Sigma Aldrich) was input to a stirrer and mixed with distilled water while distilled water is stirred. The weight ratio of the cellulose powder (otherwise, the cellulose raw material) and the distilled water was about 1 to 49. A temperature inside the stirrer was maintained at 4°C. After the cellulose raw material and the distilled water were sufficiently mixed, the homogenization unit was sealed, and the cellulose raw material was stirred at about 2,000 rpm. The dry ice was added to the cellulose raw material being stirred to achieve a pressure condition of about 2,000 bar. A stirring time was about 10 minutes. In the process of grinding the cellulose raw material, a temperature inside the homogenization unit was maintained in a range of about 4°C to 8°C. As a result, carbonization marks could not be found from the ground cellulose raw material.

Meanwhile, it was found that energy consumed to obtain the dissociated cellulose raw material was equivalent to about 3,750 KWh/t. This energy consumption is about one-eighth of energy (30,000 KWh/t) of the conventional process of grinding the cellulose raw material.

### Example 2: Dissociation of Cellulose Raw Material including Electron Beam Irradiation Operation

The same method as example 1 was performed, but after the stirring was completed, an electron beam of 200 kGy was irradiated for three minutes, and then the cellulose raw material and the distilled water were stirred and homogenized at 50°C for about 40 minutes. The subsequent operations are the same as example 1.

In this case, energy of example 2, including the electron beam irradiation energy, was saved by about 37% compared to the energy consumption of example 1.

### Example 3: Microfiberization of Ground Cellulose Raw Material

The ground cellulose raw material was moved into the micro-channel of the pressing unit. The rotor installed inside the micro-channel was rotated at a speed of 1,500 rpm to achieve a pressure condition of 2,500 bar. Meanwhile, the cellulose raw material dissociated and extracted inside the micro-channel was transformed into the microfiber for about eight minutes. As the above process is repeated, a finer cellulose fiber may be obtained, and when the process was performed 20 times, a cellulose microfiber having a static viscosity of 20,000 cps may be obtained.

### Comparative Example 1

Referring to comparative document 1, it could be identified that energy of up to 70,000 KWh/t was typically consumed to manufacture the cellulose microfiber through the physical process. Typically, energy of more than 60,000 KWh/t was consumed to grind (or homogenize) the cellulose raw material.

### Comparative Example 2

The same process as example 1 was performed, but the dry ice was not added separately, and the cellulose raw material was stirred at 4,000 rpm or more. A temperature inside the homogenization unit was about 260°C. As a result, carbonization marks could be found from the ground cellulose raw material.

In summary, the method of grinding a cellulose raw material according to the present disclosure has advantages in terms of low energy consumption, a simple structure, and ease of supply of raw materials as compared to the conventional method. Further, the method for producing a cellulose microfiber according to the present disclosure has advantages in that all processes are performed at a low temperature, and thus side reactions such as carbonization of the cellulose microfiber and introduction of substituents are suppressed. As a result, it may be identified that the cellulose microfiber produced according to the method for producing a cellulose microfiber according to the present disclosure does not have a decrease in a tensile strength and maintains uniform quality.

## Claims

1. A method of dissociating and extracting a cellulose raw material, the method comprising:
a first operation of mixing the cellulose raw material and a swelling agent and swelling the cellulose raw material;
a second operation of adding a sublimable material to the swollen cellulose raw material;
a third operation of irradiating the cellulose raw material, to which the sublimable material is added, with an electron beam; and
a fourth operation of nano-bubbling the cellulose raw material irradiated with the electron beam.

2. The method of claim 1, wherein the swelling agent is distilled water, and the sublimable material includes one or more materials selected from the group consisting of dry ice, liquid nitrogen, liquid helium, liquid neon, and liquid argon.

3. The method of claim 2, wherein the sublimable material is the dry ice.

4. The method of claim 3, wherein the first operation and the third operation are performed under a temperature condition of 1 °C or more and 10°C or less.

5. The method of claim 1, wherein, in the third operation, the electron beam of 10 kGy to 300 kGy is irradiated.

6. A method for producing a cellulose microfiber, the method comprising:
an operation of preparing a cellulose raw material ground according to the method of dissociating and extracting the cellulose raw material according to any one of claims 1 to 5;
an operation of synthesizing the cellulose microfiber from the dissociated and extracted cellulose raw material through a physical process; and
an operation of stabilizing the cellulose microfiber by projecting ultrasonic waves to the cellulose microfiber.

7. The method of claim 6, wherein, in the physical process, the ground cellulose raw material is included in a micro-channel, and the ground cellulose raw material is rotated at a rotational speed of 1,000 rpm.

8. The method of claim 6, wherein a micro-channel has a length of a short axis of 1 µm or more and 100 µm or less.

9. The method of claim 8, wherein the micro-channel has the length of the short axis of 10 µm or more and 20 µm or less.

10. A cellulose microfiber produced according to the method for producing a cellulose microfiber of claim 8.

11. An apparatus for manufacturing a cellulose microfiber, the apparatus comprising:
a homogenization unit which includes a stirrer and a pressure controller and in which a cellulose raw material is dissociated and extracted;
a pressing unit configured to induce synthesis of the cellulose microfiber by pressing the dissociated and extracted cellulose raw material obtained by the homogenization unit; and
a stabilization unit configured to project ultrasonic waves to the cellulose microfiber.

12. The apparatus of claim 11, wherein the pressing unit includes:
at least one micro-channel in which a ground cellulose raw material is stored or passes; and
at least one rotor positioned inside the micro-channel and configured to rotate the dissociated and extracted cellulose raw material to provide a shear force to the ground cellulose raw material.
